# EUROPEAN PATENT APPLICATION

(11) **EP 2 810 566 A1**
(43) Date of publication of application: **10.12.2014**
(21) Application number: 13170865.3
(22) Date of filing: 06.06.2013
(51) Int. Cl.: A23L 3/36, F25D 15/00, F25D 31/00

(54) **Apparatus and method for cooling cooked fluid food products**

(71) Applicant: NILMA S.P.A., 43122 Parma (IT)
(72) Inventor: Paris, Gian Luigi, 43122 Parma (IT); Nobili, Alberto, 43122 Parma (IT)
(74) Representative: Crugnola, Pietro

(57) **Abstract**

An apparatus (1) for cooling a cooked fluid food product (40) contained in a cooking container (50) comprises cooling means (11) suitable for cooling said cooked fluid food product (40) in said cooking container (50), said cooling means (11) comprising heat exchanging means (15) arranged for being immersed, and for being maintained temporarily immersed, in said cooked fluid food product (40) contained in said cooking container (50). A method for cooling a cooked fluid food product (40) contained in a cooking container (50) by using the apparatus (1) comprises the following steps: immersing heat exchanging means (15) in said cooked fluid food product (40) contained in said cooking container (50), said heat exchanging means (15) being comprised in said apparatus (1); maintaining said heat exchanging means (15) temporarily immersed in said cooked fluid food product (40), so as to enable said heat exchanging means (15) to exchange heat with, and consequently cool, said cooked fluid food product (40); optionally, repeatedly extracting said heat exchanging means (15) from said cooked fluid food product (40) and repeatedly immersing said heat exchanging means (15) into said cooked fluid food product (40), so as to stir, and accelerate the cooling of, said cooked fluid food product (40).

## Description

The present invention relates to an apparatus and a method for cooling cooked fluid food products, in particular fluid food products prepared and cooked in large cooking pans or trays, such as those used in meal-producing centres and, more in general, in the food industry.

In the mass catering field, meal-producing centres are known and largely widespread, i.e. facilities in which the meals are prepared that are intended to be subsequently distributed and consumed in mass catering canteens.

In the meal-producing centres, the procedures to be followed for cooling the cooked food products are regulated by substantially strict regulations.

For example, on the basis of the European Community Regulation No. 852/2004 (as well as on the basis of the guidelines for applying the Regulation, which are inspired by the principles of the "Codex Alimentarius" CAC/RCP 1-1996 Rev. 4-2003 and furnish instructions for the fulfilment of the HACCP self-monitoring system), if the cooked food products have to be preserved or served at low temperature, it is necessary to cool the aforesaid products in the fastest way possible, to a temperature that does not cause risks for the health of the consumer and cooling has to be carried out at the end of heat treatment. Other national regulations establish specific temperatures for cooling and preserving cooked food products.

For example, in Italy, Presidential Decree No. 327 of 26/03/1980 establishes that cooked food products, which are to be consumed cold, are stored at a temperature that is not above +10°C.

Still in Italy, the Local Hygiene Regulations of the Lombardy Region establishes that meal-producing centres have to be provided with a suitable system for cooling the cooked food products (produced therein) so as to reach in a 3-hour time a temperature of +8°C in the heart of the product, as well as with equipment provided with temperature recorders for preserving the aforesaid cooked food products at a temperature of +2°C in the case of use of the refrigerated link. By "refrigerated link" a procedure is meant for preparing and conveying complete meals, or meal components, packaged in multiple portions and to be stored at a refrigerating temperature, i.e. between 0°C and +10°C.

Consequently, various methods have been proposed and adopted for cooling fluid food products prepared and cooked in the cooking pans that are used in meal-producing centres and in the food industry.

A cooling method is known in which the cooked fluid food product is transferred with a ladle from the cooking pan to a plurality of gastronorm containers, where by "gastronorm container" a container is meant having dimensions that are congruent with the EN 631 standard drawn up by the CEN (*Comité Européen de Normalisation*).

Gastronorm containers, which are moved by carts, are then inserted in chillers of known type, i.e. in devices that are able to lower the temperature of the cooked fluid food products rapidly, before they are conserved in a refrigerator. Alternatively to manual transferring (by a ladle), a pump can be used to transfer the fluid food product from the pan to the gastronorm containers.

The method disclosed above has significant drawbacks, namely the risk of dangerous (for example microbial) contaminations when the food product is transferred into the gastronorm containers, as well as the risk of heat burns for operators transferring the cooked fluid food products and/or moving containers and carts.

According to another known cooling method, water ice, dry ice (CO₂ in solid state) or liquid nitrogen are used to lower the temperature of the cooked fluid food product.

The dry ice and the water ice can be dispensed directly into the cooked fluid food product to be cooled, by mixing the latter by a stirring device to improve the efficiency of the cooling procedure.

One drawback connected with the use of water ice is that the latter increases the percentage of water that is present in the cooked fluid food product (i.e. it dilutes the food product), thus altering the properties thereof.

One drawback connected with the use of dry ice is that the latter sublimates and significantly modifies the composition of air in the work area in which the operator is situated who is assigned to the cooling procedure. Therefore it is necessary to remove the CO₂ from the work area through an efficient suction system to avoid that the percentage concentration of oxygen (in the work area) descends to values that are such as to cause the operator to faint. If liquid nitrogen is used in the cooling procedure, the latter - once dispensed -only wets the surface of the cooked fluid food product. Therefore, in order to cool the food product suitably, it is necessary to consume large quantities of liquid nitrogen, which makes the procedure significantly costly.

Another significant drawback connected with the use of the liquid nitrogen consists of the risk that the operators (who move containers and carts) suffer cold burns, i.e. burns due to accidental contact with the liquid nitrogen (which is liquid at temperatures comprised between -173°C and -196°C).

More in general, one drawback that is common to the methods based on the use of water ice, dry ice or liquid nitrogen lies in the high cost of the cooling means used.

In fact, specific apparatuses are required to store and dispense the refrigerating product (water ice, dry ice or liquid nitrogen). Moreover, the refrigerating product is not reusable - inasmuch as it is dispensed in a "disposable" mode - and this further increases the cost of the aforesaid methods.

According to another known cooling method, the food product is transferred by a pump from the cooking pan to a dedicated cooling pan.

Nevertheless, also this method is troubled by various drawbacks.

First of all, it is necessary to prepare a plant comprising both the cooking pan and the cooling pan, which substantially doubles plant costs.

Moreover, it is necessary to sanitise - i.e. to wash and disinfect - both the cooking pan and the cooling pan, which significantly increases working hours, and therefore costs, for plant maintenance.

Another known cooling method is used for indirect heated cooking pans or trays, i.e. for the pans provided with an interspace in which steam is circulated for cooking. According to this method, once cooking of the food product has been completed, a suitable (liquid) cooling fluid is circulated in the interspace of the pan.

One drawback of the aforesaid method consists of the fact that the cooked food product can be cooled in an optimum manner only after the cooling fluid has exchanged heat with all the surfaces (of the pan) that came into contact with the steam during the cooking step. Consequently, it is necessary to make the cooling fluid circulate in the interspace for a long time, with a consequent increase in working times.

Another drawback is connected with the operating pressure of the interspace of known cooking pans. As the aforesaid pressure is often lower than 1 bar, it is not possible to achieve a flow rate (of the cooling fluid) that is sufficient to reach a desired cooling speed. According to a further known cooling method, which is used for indirect heated cooking pans, the cooling fluid is circulated both in the interspace and inside a mixing device, mounted at the vertical axis of the pan.

Nevertheless, in this manner, the heat exchange is only partially improved. Further, the aforesaid refrigerated mixing device cannot be removed from the pan and is therefore difficult to clean and sanitise.

One object of the invention is to improve apparatuses and methods for cooling the fluid food products prepared and cooked in the cooking pans or trays used in the meal-producing centres and, more in general, in the food industry.

Another object is to provide an apparatus and a method for cooling the fluid food products prepared and cooked in the cooking pans or trays that enable the need for transferring the aforesaid products into temporary containers or into cooling pans and the risk of heat burns or cold burns for the operators and the risk of the aforesaid products getting contaminated during the transfer to be avoided.

A further object is to provide an apparatus and a method that enable the fluid food products prepared and cooked in the cooking pans or trays to be cooled without requiring an excessive expenditure of time and/or money.

A still further object is to provide a cooling apparatus that can be used with the known cooking pans or trays without requiring particular set-ups or modifications of the latter.

In a first aspect, an apparatus is provided for cooling a cooked fluid food product, as defined in claim 1.

In a second aspect, a method is provided for cooling a cooked fluid food product, as defined in claim 15.

Owing to these aspects, an apparatus and a cooling method are made available by means of which it is possible to cool the fluid food products directly in the respective cooking pans and prevent, at the same time, risks to the health of operators, risks of food products contamination, excessive plant and maintenance costs.

In fact, owing to the apparatus and the method according to the invention, it is no longer necessary to transfer the cooked food products into gastronorm containers and place the latter inside chillers. In this manner, it is possible to avoid both the risk of heat burns for the operators and the risk of food products becoming accidentally contaminated during the transfer into the gastronorm containers.

Moreover, it is possible to avoid the use of refrigerating products - such as water ice, dry ice or liquid nitrogen - to be dispensed directly into the cooked fluid food product, which enables the corresponding drawbacks to be avoided (undesired dilution of the cooked food product, risk of cold burns, impossibility of reusing the dispensed refrigerating product, need to use an efficient suction system in the work area, etc.).

It is also possible to avoid the use of dedicated cooling pans, thus reducing both plant costs and the working hours required for the plant maintenance.

Lastly, the apparatus and the method according to the invention can also be used for cooling the fluid food products that are prepared and cooked in indirect heat cooking pans. In this manner, for cooling the cooked food product, it is no longer necessary to preliminarily cool the walls of the interspaces or, alternatively, equip the pans with refrigerated mixing devices that are difficult to clean and sanitise.

The invention can be better understood and implemented with reference to the attached drawings that illustrate an embodiment thereof by way of non-limiting example, in which:
Figure 1 is a perspective schematic view showing an apparatus according to the invention;
Figure 2 is a perspective schematic view showing the internal structure of the apparatus in Figure 1;
Figure 3 is a fragmented and incomplete perspective schematic top view, showing details of the internal structure of the apparatus in Figure 1;
Figure 4 is a partially sectioned perspective schematic view, showing the apparatus in Figure 1 in an operating step;
Figure 5 is a partially sectioned perspective schematic view, showing the apparatus in Figure 1 in a further operating step;
Figure 6 is a perspective schematic view showing an embodiment of the heat exchanging means comprised in the apparatus according to the invention;
Figure 7 is a perspective schematic view showing another embodiment of the heat exchanging means comprised in the apparatus according to the invention;
Figure 8 is a perspective schematic view showing a further embodiment of the heat exchanging means comprised in the apparatus according to the invention;
Figure 9 is a perspective schematic view showing a still further embodiment of the heat exchanging means comprised in the apparatus according to the invention.

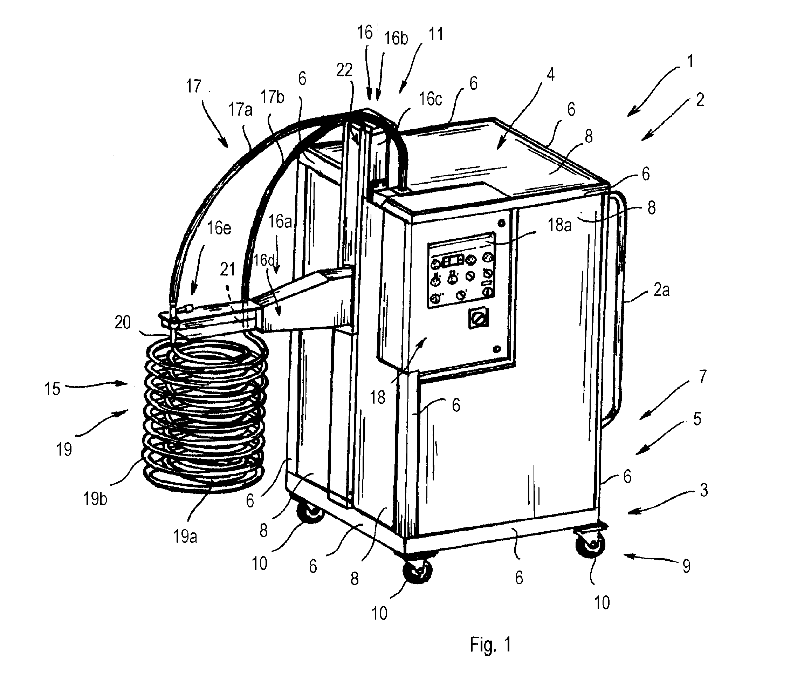

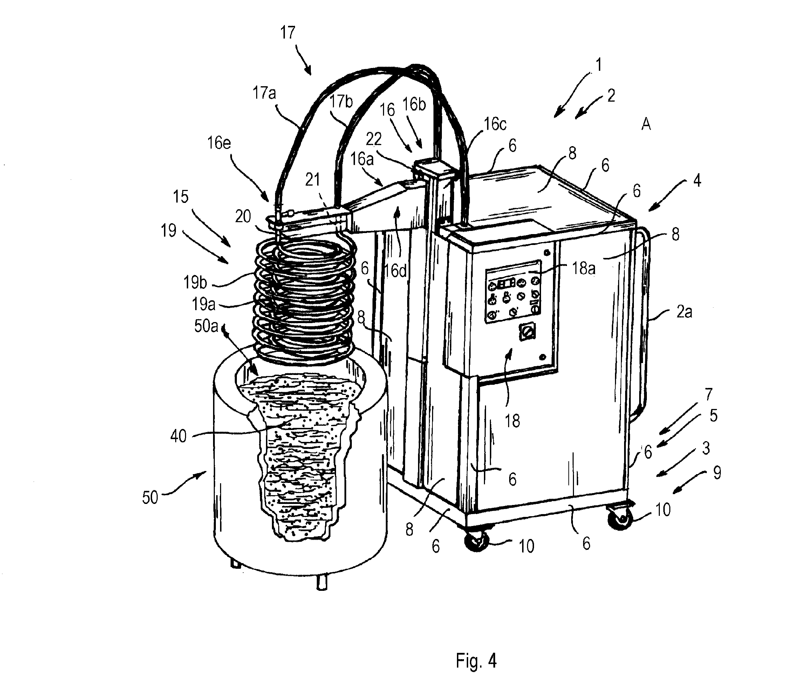

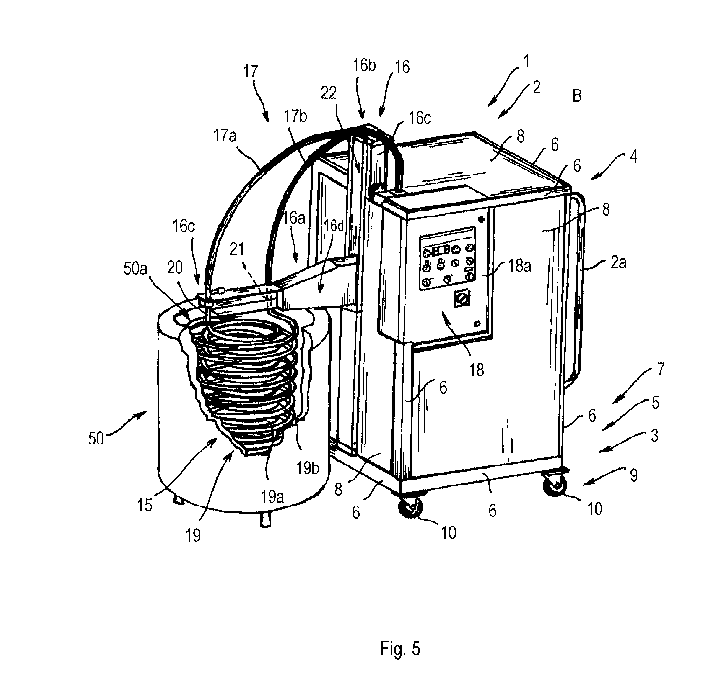

In the following, both in the description and in the claims, the term "cooked food product" is to be considered a synonym of the term "cooked food" and is thus wholly equivalent to the latter. Similarly, the term "cooked fluid food product" is to be considered a synonym of the term "cooked fluid food", and thus wholly equivalent to the latter. By "cooked fluid food product", or "cooked fluid food" a cooked food product is meant that is made in liquid or semiliquid form, such as, for example a sauce or a soup. By "cooking container" a cooking pan, a cooking tray or a cooking tank - as well as any other container that is suitable for being used to prepare and cook a food product, in particular a fluid food product - are meant. Figures 1, 2, 3, 4 and 5 show an apparatus 1 for cooling a cooked fluid food product 40 (Figure 4), contained in a cooking container 50, for example a pan, of know type (Figure 4; Figure 5). The cooked fluid food product 40 is a liquid or semiliquid product, such as, for example, a sauce or a soup. The cooking container 50 can have a nominal capacity comprised between 100 litres and 1000 litres.

The apparatus 1, made of stainless steel or of another suitable material that is resistant to use and can be easily sanitised, comprises a body 2, in which a base 3 and an upper portion 4 are defined. The base 3 corresponds to the portion of the body 2 which, in use, faces downwards, i.e. towards a resting surface (not shown) - for example, the floor of a processing room - on which the apparatus 1 is positioned. The upper portion 4 corresponds to the portion of the body 2 that, in use, faces upwards, i.e. in a direction opposite the base 3.

The body 2, substantially parallelepiped-shaped, is defined overall by a supporting frame 5 and by a casing 7. The supporting frame 5 is defined by a plurality of profiled elements 6, which are reciprocally connected by welding and/or suitable mechanical fixing means (for example, bolts). The casing 7 comprises a plurality of panels 8, each of which is substantially quadrilateral-shaped and mounted on the supporting frame 5.

The body 2 of the apparatus 1 is movable horizontally - i.e. on the underlying resting surface - by positioning means 9, comprising a plurality of wheels 10 mounted on a lower face (that is not shown) of the base 3.

In the embodiment of the apparatus 1 shown in Figures 1, 2, 3, 4 and 5 the positioning means 9 comprises four wheels 10, mounted on the lower face of the base 3 near the four corners of the latter. The wheels 10 can be of the so-called "swivelling" type, i.e. wheels that are rotatable around both a horizontal and a vertical axis.

In embodiments that are not shown, the positioning means 9 can comprise a number of wheels 10 that is less than four (and preferably equal to three) or greater than four.

In a further embodiment that is not shown, the apparatus 1 does not comprise the positioning means 9. This embodiment can be used, for example, for cooling a cooked fluid food product contained in a cooking container that is provided with wheels and can thus be moved towards the apparatus 1.

In order to facilitate the horizontal moving of the apparatus 1, the latter is provided with a pair of handles 2a, which are graspable by an operator. The handles 2a are arranged vertically on the body 2 and fixed on corresponding profiled elements 6 of the supporting frame 5. In embodiments that are not shown, the handles 2a are fixed on the profiled elements 6 of the supporting frame 5 so as to be arranged horizontally on the body 2.

The apparatus 1 is provided with cooling means 11, comprising a cooling unit 12 and suitable for cooling the cooked fluid food product 40 directly in the cooking container 50.

In the cooling unit 12 there is comprised a plurality of devices, altogether suitable for circulating in the cooling means 11 one or more refrigerating (liquid or gaseous) fluids, as well as suitably modifying the temperature of the latter, for the purpose of cooling the cooked fluid food product 40 directly inside the cooking container 50.

The cooling unit 12 comprises a compressor 13, a condenser 14, expanding means for expanding the refrigerating fluid (that is not shown), heat exchanging means 15, a tank 30 (of liquid refrigerating fluid), a plate heat exchanger 31, moving means 16 (arranged for moving the heat exchanging means 15, i.e. for enabling the heat exchanging means 15 to be alternatively immersed in, or extracted from, the cooked fluid food product 40 contained in the cooking container 50), refrigerating fluid conveying means 17 and a control unit 18. Except for the heat exchanging means 15, in embodiments that are not shown of the cooling unit 12, one or more of the elements listed above can be absent (i.e. they are not comprised inside the apparatus 1 but are connected to the cooling unit 12 from the outside), or can be replaced by functionally similar devices.

The cooling unit 12 is partially (compressor 13, condenser 14, expanding means for expanding the cooling fluid, tank 30, plate heat exchanger 31, control unit 18) positioned inside the body 2 and partially (heat exchanging means 15, moving means 16) outside the body 2.

The cooling unit 12 can have a power variable from 10kW to 100 kW, depending on the nominal capacity of the cooking container 50 containing the cooked fluid food product 40. The compressor 13, of known type, is fixed to an internal face 3a of the base 3 and is provided with a motor (that is not shown) having power comprised between 3 kW and 50 kW.

The compressor 13 can be an alternating compressor or a rotating compressor. If the compressor 13 is of the alternating type, it can be a hermetic, semi-hermetic or open compressor. If the compressor 13 is of the rotating type, it can be a blade compressor, a so-called "scroll" compressor, a screw compressor, a centrifugal compressor.

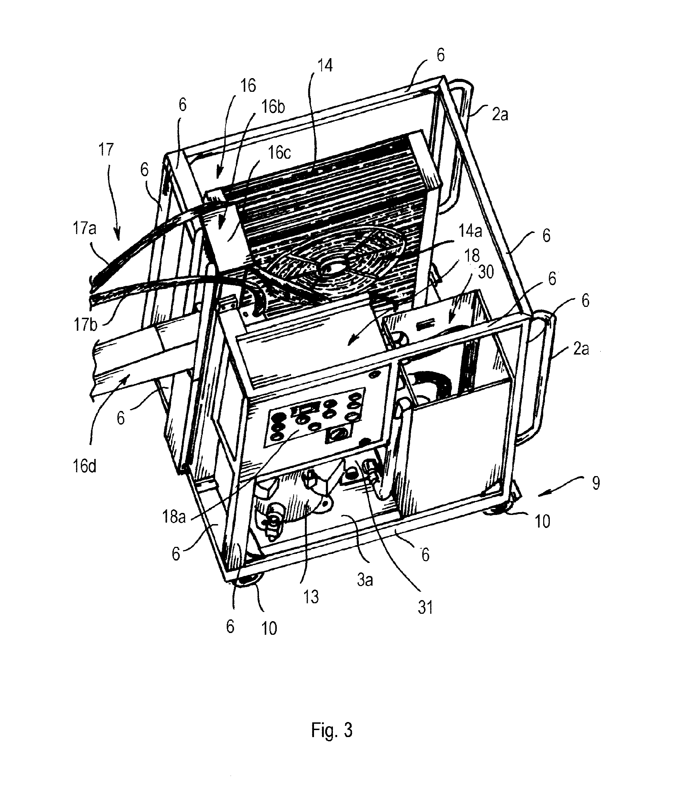

The condenser 14, for example a finned condenser of known type, is mounted on the internal face 3a in a position opposite the compressor 13 and is provided with a pair of motor-driven fans 14a (only one of which is shown in Figure 3).

The tank 30 contains a volume of liquid refrigerating fluid comprised between 30 and 100 litres (on the basis of the power of the compressor 13) and is mounted on the internal face 3a, in a position adjacent to the compressor 13. In the tank 30 a first submerged pump and a second submerged pump (that are not shown), are installed, both of which are of self-priming type. As a liquid refrigerating fluid, (ethylene or polyethylene) glycol can be used mixed with water. In the mixture of water and glycol, the percentage of glycol can vary, for example, from 5 to 50%.

The plate heat exchanger 31, of known type, is mounted on the internal face 3a, in an intermediate position between the compressor 13 and the tank 30.

The expanding means for expanding the refrigerating fluid is interposed between the condenser 14 and the plate heat exchanger 31. For example, the expanding means for expanding the refrigerating fluid can comprise a lamination valve of known type.

The control unit 18 is mounted on the supporting frame 5, near the upper portion 4 and above the compressor 13. The control unit 18 comprises a control panel 18a, facing outside the body 2 and containing the various devices - namely switches, pushbuttons, pilot lights, thermostats and/or programmable logic controllers (PLC) - that are required to check the operation of the cooling means 11 and, in particular, drive the compressor 13 and the moving means 16.

The heat exchanging means 15 comprises a cooling element 19, made using a pipe of stainless steel (or of another suitable material) having a circular cross section and a diameter comprised between 10 mm and 100 mm. The cooling element 19, as it will be explained in greater detail below, is arranged for being immersed into the cooked fluid food product 40 (contained in the cooking container 50) and being traversed by a suitable pressurised liquid refrigerating fluid (i.e. the liquid refrigerating fluid contained in the tank 30).

The pipe forming the cooling element 19 is folded around a longitudinal axis (that is not shown) so as to form a double cylindrical coil, comprising an internal cylindrical coil 19a and an external cylindrical coil 19b.

The internal cylindrical coil 19a and the external cylindrical coil 19b are coaxial and placed at a reciprocal distance that is comprised between 4 cm to 15 cm. In the internal cylindrical coil 19a and in the external cylindrical coil 19b, the reciprocal distance between two adjacent coils is comprised between 4 cm and 15 cm. The reciprocal distance between the internal cylindrical coil 19a and the external cylindrical coil 19b, as well as the reciprocal distance between the turns of each cylindrical coil, enable an operator to wash and disinfect (manually and/or by dispensing jets of pressurised liquid) the cooling element 19 in an ease and complete manner.

The cooling element 19 further comprises an initial conduit 20 and a terminal conduit 21 (that is shown by a dashed line). The initial conduit 20 corresponds to a rectilinear initial portion of the internal cylindrical coil 19a and the terminal conduit 21 corresponds to a rectilinear terminal portion of the external cylindrical coil 19b. The initial conduit 20 and the terminal conduit 21 can both be alternatively used as inlet conduit and as outlet conduit for the liquid refrigerating fluid, according to the manner in which the cooling element 19 is connected to the refrigerating fluid conveying means 17.

The moving means 16 comprises an operating portion 16a and a supporting portion 16b, which are mutually connected. In the assembled apparatus 1, the heat exchanging means 15 - i.e. the cooling element 19 - is mounted on the operating portion 16a. The latter can interact with the supporting portion 16b in such a manner as to enable the cooling element 19 to be moved, i.e. to be alternatively immersed in, or extracted from, the cooked fluid food product 40 contained inside the cooking container 50. When the apparatus 1 is in use (and the body 2 rests on an underlying resting surface), the supporting portion 16b is arranged vertically, i.e. substantially parallel to the body 2, whilst the operating portion 16a is arranged horizontally, i.e. substantially orthogonally to the body 2. The supporting portion 16b comprises an upright 16c (made by reciprocally assembled profiled elements), which is integral with the supporting frame 5 in a position (of the body 2) opposite the position in which the pair of handles 2a is fixed and extends from the base 3 up to beyond the upper portion 4 of the body 2. The upright 16c is hollow and mechanical and/or hydraulic moving devices of known type (that are not shown) can be housed therein that are suitable for moving the operating portion 16a vertically.

A hydraulic or mechanical jack or lifting chain means can, for example, be used as moving devices.

The operating portion 16a comprises an arm 16d (made by reciprocally assembled profiled elements), which in turn comprises an operating end 16e and a further end (that is not shown), opposite the operating end 16e and engaged in a guide 22. The latter is obtained in the upright 16c and extends longitudinally, approximately along the upper half of the upright 16c.

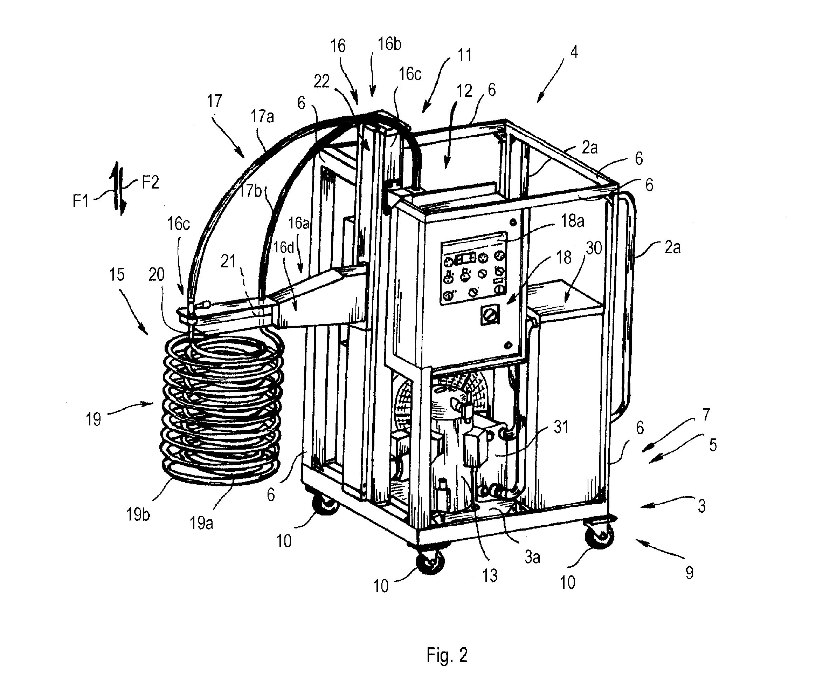

In the operating end 16e two seats (that are not shown) are comprised, into which the initial conduit 20 and the terminal conduit 21 of the cooling element 19 are respectively inserted. The two seats are mutually separated by a distance that is equal to the distance (in the cooling element 19) between the initial conduit 20 and the terminal conduit 21. The operating portion 16a - i.e. the arm 16d - can be moved according to two parallel and opposite directions indicated by the arrows F1 and F2 (that are shown in Figure 2). This is obtained by driving the mechanical and/or hydraulic devices that are housed in the upright 16c of the supporting portion 16b. The aforesaid mechanical and/or hydraulic devices can be driven and controlled by the control panel 18a of the control unit 18.

The refrigerating fluid conveying means - overall indicated by the reference number 17 - comprises a plurality of pipes of known type, both stiff (metal pipes) and flexible (pipes made of polymeric material). The refrigerating fluid conveying means 17 mutually connects various elements (namely the compressor 13, the condenser 14, the expanding means for expanding the refrigerating fluid, the heat exchanging means 15, the tank 30 and the plate heat exchanger 31) of the cooling unit 12 and defines in the latter two distinct circuits, along which two suitable refrigerating fluids are conveyed.

A first circuit (traversed by a gaseous refrigerating fluid) comprises the compressor 13, the condenser 14, the expanding means for expanding the refrigerating fluid and the plate heat exchanger 31.

A second circuit (traversed by a liquid refrigerating fluid) comprises the plate heat exchanger 31, the tank 30, the two pumps housed in the latter and the heat exchanging means 15.

The first and the second circuit (as it will be explained in greater detail below) come into contact mutually in the plate heat exchanger 31.

The refrigerating fluid conveying means 17 further comprises a pair of pipes 17a and 17b, which are inserted at the seats of the initial conduit 20 and of the terminal conduit 21 (in the operating end 16e of the arm 16d) and are part of the above-mentioned second circuit. The two pipes 17a and 17b are made of a flexible polymeric material, for example Teflon, and enable the refrigerating fluid to be conveyed that enters the cooling element 19 and exits the latter.

As the cooling unit 12 can be used with cooking containers having a nominal capacity comprised between 100 litres and 1000 litres, cooling can be obtained differently according to the volume of cooked fluid food product to be cooled, i.e. on the basis of the nominal capacity of the cooking container in which the fluid food product has been prepared and cooked.

In fact, in the case of small volumes of cooked fluid food product to be cooled (cooking containers having a reduced nominal capacity), it is sufficient to use a refrigerating fluid contained directly in the apparatus 1. On the other hand, in the case of large volumes of cooked fluid food product to be cooled (cooking containers having a large nominal capacity), it is opportune to use both the refrigerating fluid contained in the apparatus 1 and a refrigerating fluid supplied by an external supply network to the apparatus 1.

By way of example, a first operating procedure of the cooling unit 12 (in which only the refrigerating fluid contained in the apparatus 1 is used) and a second operating procedure of the cooling unit 12 (in which the refrigerating fluid contained in the apparatus 1 and a refrigerating fluid coming from an external supply network are used) are disclosed concisely below.

In the first operating procedure, a refrigerating gas (gaseous refrigerating fluid) of known type is compressed in the compressor 13, with a consequent increase in pressure and temperature, and conveyed (by the refrigerating fluid conveying means 17) to the condenser 14.

As suitable refrigerating gases, for example, R404, R507 (mixtures of halogenated hydrocarbons), R600 (butane), R717 (ammonia) can be used. On the basis of the power of the cooling unit 12, the quantity of refrigerating gas contained and used in the latter varies from 5 kg to 12 kg.

In the condenser 14 the refrigerating gas is cooled, passing from the gaseous phase to the liquid phase. The liquefied refrigerating gas exiting the condenser 14 is passed through the expanding means for expanding the cooling fluid (lamination valve), so as to undergo a significant reduction of pressure and temperature. The refrigerating gas (in liquid phase and at low temperature) exiting the expanding means for expanding the cooling fluid is introduced in the plate heat exchanger 31. In the latter, the refrigerating gas can exchange heat with the liquid refrigerating fluid coming from the tank 30. In fact, through the first submerged pump of the tank 30, the liquid refrigerating fluid is conveyed from the tank 30 to the plate heat exchanger 31 and then again to the tank 30. Through the effect of the heat exchange between the refrigerating gas and the liquid refrigerating fluid, the latter is cooled. Once brought back to the tank 30, the (at low temperature) liquid refrigerating fluid can be introduced in the cooling element 19. In fact, through the second submerged pump of the tank 30, the liquid refrigerating fluid is conveyed from the tank 30 to the cooling element 19 and then again to the tank 30. At the cooling element 19 a further heat exchange occurs between the cooked fluid food product 40, contained in the cooking container 50, and the low temperature liquid refrigerating fluid. Inside the cooling element 19, the liquid refrigerating fluid exchanges heat with the cooked fluid food product 40 and, by absorbing heat, is heated. The (at high temperature) liquid refrigerating fluid goes back in the tank 30 and, through the first submerged pump, is introduced again in the plate heat exchanger 31. In the latter, the liquid refrigerating fluid can exchange heat with the refrigerating gas, which is heated in such a manner as to pass again into a gaseous phase. The refrigerating gas, in a gaseous phase and at a high temperature, goes back to the compressor 13 (which thus starts a new cooling cycle).

In the second operating procedure an external liquid refrigerating fluid, i.e. coming from a supply network outside the apparatus 1, and an internal liquid refrigerating fluid, i.e. the liquid refrigerating fluid contained in the tank 30, are used. The external liquid refrigerating fluid can be, for example, a mixture of water and glycol.

In the second operating procedure the plate heat exchanger 31 is directly connected - through suitable piping (that is not shown) - to the external supply network, which produces and dispenses the refrigerating fluid. Therefore, in this operating procedure the compressor 13, the condenser 14 and the expanding means for expanding the cooling fluid are not used. The external (at low temperature) liquid refrigerating fluid coming from the external supply network is introduced in the plate heat exchanger 31. In the latter, the external liquid refrigerating fluid can exchange heat with the internal liquid refrigerating fluid, which, through the first submerged pump of the tank 30, is conveyed from the tank 30 to the plate heat exchanger 31 and then again to the tank 30. Through the effect of the heat exchange between the external liquid refrigerating fluid and the internal liquid refrigerating fluid, the latter is cooled. Once the internal (at low temperature) liquid refrigerating fluid reaches the tank 30, it is introduced in the cooling element 19 through the second submerged pump of the tank 30. Through the second submerged pump the internal liquid refrigerating fluid is conveyed from the tank 30 to the cooling element 19 and then again to the tank 30. At the cooling element 19 the further heat exchange occurs between the cooked fluid food product 40, contained in the cooking container 50, and the internal liquid refrigerating fluid at low temperature. Inside the cooling element 19, the internal liquid refrigerating fluid exchanges heat with the cooked fluid food product 40 and, by absorbing heat, is heated. The internal (at high temperature) liquid refrigerating fluid goes back to the tank 30 and, through the first submerged pump, is introduced again in the plate heat exchanger 31. In the latter, the internal liquid refrigerating fluid can exchange heat with the external liquid refrigerating fluid, which is heated. The external liquid refrigerating fluid, having a high temperature, returns to the external supply network and, in the latter, is brought again to a low temperature. The external (at low temperature) liquid refrigerating fluid is conveyed again from the external supply network to the plate heat exchanger 31 of the apparatus 1, so as to start a new cooling cycle.

Alternatively, in the second cooling procedure, the refrigerating fluid coming from the external supply network can be a gaseous refrigerating fluid (instead of a liquid refrigerating fluid). In this case, the gaseous refrigerating fluid can be compressed and heated in the compressor 13, cooled and liquefied in the condenser 14, further cooled in the expanding means (lamination valve) of the cooling unit 12. Once introduced in the plate heat exchanger 31, the gaseous refrigerating fluid (in liquid phase and at low temperature) can exchange heat with the liquid refrigerating fluid (coming from the tank 30). After this heat exchange, the second cooling procedure can proceed in the manner disclosed above.

In the first operating procedure and in the second operating procedure, the pipe 17a and the pipe 17b of the cooling unit 12 can be alternatively used for introducing the liquid refrigerating fluid into the cooling element 19 or for removing the liquid refrigerating fluid from the cooling element 19. For example, the pipe 17a can be interposed between the cooling element 19 and the plate heat exchanger 31, whilst the pipe 17b can be interposed between the cooling element 19 and the tank 30. In this configuration, the pipe 17a enables the liquid refrigerating fluid exiting the cooling element 19 to be conveyed, whilst the pipe 17b enables the liquid refrigerating fluid entering the cooling element 19 to be conveyed. It is nevertheless possible to invert the aforesaid configuration, by using the pipe 17a to convey the liquid refrigerating fluid to the cooling element 19 and using the pipe 17b to remove the liquid refrigerating fluid from the cooling element 19.

It should be noted that, for the purpose of making the apparatus according to the invention, the structure and/or the operation of the cooling unit disclosed above can be suitably adapted or varied (by applying modifications that are easily conceivable by a person skilled in the art) provided that the heat exchanging means is present, arranged for exchanging heat with (and consequently cooling) a cooked fluid food product (contained in a cooking container) and the aforesaid heat exchanging means can be immersed, and maintained temporarily immersed, in the aforesaid cooked fluid food product.

In use, the apparatus 1 can be located in a processing room, for example, of a meal-producing centre or of a food industry.

An operator, through the control panel 18a, drives the moving devices housed in the upright 16c. In this manner, the arm 16d can be moved according to the direction F1, i.e. raised, and brought to a raised configuration A (Figure 4).

After gripping the handles 2a, the operator can move manually, i.e. push, the apparatus 1 (through the positioning means 9), so as to bring the apparatus 1 to near the cooking container 50, in a cavity 50a of which a certain volume of the cooked fluid food product 40 is contained - for example a sauce or a soup - which has been prepared and cooked in the cooking container 50.

The operator positions the apparatus 1 (in the raised configuration A) in such a manner that the cooling element 19 is arranged above the cooking container 50. Thus the operator drives the compressor 13 (or activates the external supply network, if the second operating procedure is applied) and again drives the moving devices housed in the upright 16c.

In this manner, the arm 16d can be moved according to the direction F2, i.e. lowered, and brought to a lowered configuration B (Figure 5). In the lowered configuration B, the cooling element 19 is completely received in the cavity 50a of the cooking container 50 and is thus completely immersed in the cooked fluid food product 40 (which, for the sake of clarity, has not been shown in Figure 5).

By maintaining the cooling element 19 immersed in the cooked fluid food product 40 for a suitable time - which varies on the basis of the nominal capacity of the cooking container 50 and the properties of the cooked fluid food product 40 contained therein - it is possible to achieve an efficient heat exchange between the cooked fluid food product 40 and the liquid refrigerating fluid that circulates inside the cooling element 19. In this manner, the temperature of the cooked fluid food product 40 can descend easily, and rapidly, from about + 100 °C to + 8 °C.

It should be noted that the time required for cooling the cooked fluid food product 40 depends on various physical and thermodynamic parameters of the food product, and on the quantity of the latter. For example, 100 kg of tomato sauce can be cooled in 30 minutes, whilst 200 kg of bechamel can be cooled in 60 minutes.

The heat exchange between the cooked fluid food product 40 and the liquid refrigerating fluid that circulates inside the cooling element 19 can be accelerated by suitably stirring the cooked fluid food product 40 inside the cavity 50a.

This can be easily obtained by moving the arm 16d so as to bring the latter alternatively and repeatedly from the lowered configuration B to the raised configuration A, and vice versa.

Consequently, the cooling element 19 is alternatively and repeatedly immersed into, and extracted from, the cooked fluid food product 40. In this manner, the cooling element 19 acts as a stirring device, which, by stirring the cooked fluid food product 40, accelerates the cooling of the latter.

In one embodiment that is not shown, the arm 16d can be hinged on the supporting portion 16b - i.e. on the upright 16c -and driven, by mechanical and/or hydraulic devices of known type, in such a manner as to be able to be alternatively rotated upwards (i.e. towards the upper portion 4 of the body 2) or downwards (i.e. towards the base 3 of the body 2). Also in this different configuration of the moving means 16, the cooling element 19 can be alternatively, and repeatedly, raised and lowered. Thus, also in this different configuration of the moving means 16, the cooling element 19 can be alternatively and repeatedly immersed in, and extracted from, the cooked fluid food product 40, so as to stir the cooked fluid food product 40 and accelerate cooling of the latter.

In a further embodiment that is not shown, the arm 16d can be mounted on the supporting portion 16b in such a manner as to be locked in a raised configuration (for example in the raised configuration A). In this case, after positioning suitable lifting means - for example a lifting platform of known type - under the cooling element 19, it is possible to move the cooking container (for example, a cooking container provided with wheels) to the apparatus 1 and position the cooking container on the lifting platform. The latter can be raised, so as to move the cooking container vertically towards the cooling element 19 until the cooling element 19 is immersed in the cooked fluid food product. The lifting platform is then locked and the cooling element 19 is maintained immersed in the cooked fluid food product for a suitable time. After completing cooling of the cooked fluid food product, the lifting platform can be lowered, so as to extract the cooling element 19 from the cooked fluid food product. Also through this further embodiment that is not shown the cooling element 19 can be alternatively and repeatedly immersed in, and extracted from, the cooked fluid food product 40, so as to stir the cooked fluid food product 40 and accelerate cooling of the latter. This can be achieved by raising and lowering (alternatively and repeatedly) the lifting platform on which the cooking container is positioned.

The cooling procedure disclosed above can be carried out also by using the apparatus 1 provided with the movable moving means 16. In this case, the arm 16d is moved according to the direction F1 and brought to the raised configuration A, after which it is possible to proceed in the manner disclosed above.

It should be noted that, for cooling the cooked fluid food product 40 inside the cooking container 50 in a suitable manner, it is not indispensable that the cooling element 19 is alternatively and repeatedly immersed in, and extracted from, the cooked fluid food product 40. This procedure can be considered as an optional procedure, which is applicable if it is desired to accelerate the heat exchange between the cooked fluid food product 40 and the liquid refrigerating fluid that circulates inside the cooling element 19.

After bringing the cooked fluid food product 40 to the desired (low) temperature, the operator can switch off the compressor 13 (or deactivate the external supply network, if the second operating procedure has been applied), bring the arm 16d to the raised configuration A and move the apparatus 1 horizontally, so as to remove the latter from the cooking container 50. After use, the cooling element 19 can be easily sanitised, namely washed and disinfected, both manually and by dispensing jets of pressurised liquid.

On the basis of what has been disclosed so far, the advantages offered by the apparatus and by the method according to the invention are extremely clear.

The apparatus 1, as well as the cooling method that is implementable through the apparatus 1, enable the cooked fluid food product 40 to be cooled directly in the respective cooking container 50. In this manner, the cooked fluid food product 40 does not have to be transferred to gastronorm containers, which avoids both the risks of hot burns for the operators and the risk that the cooked fluid food product 40 is contaminated during the handling thereof. Moreover, it is possible to avoid dispensing refrigerating fluids - such as, for example, liquid nitrogen - directly in contact with the cooked fluid product 40, so as to avoid both the risk of operators suffering cold burns and the high cost of the cooling means. Lastly, it is possible to avoid the use of dedicated cooling pans, thus reducing plant costs and the working hours required for the plant maintenance.

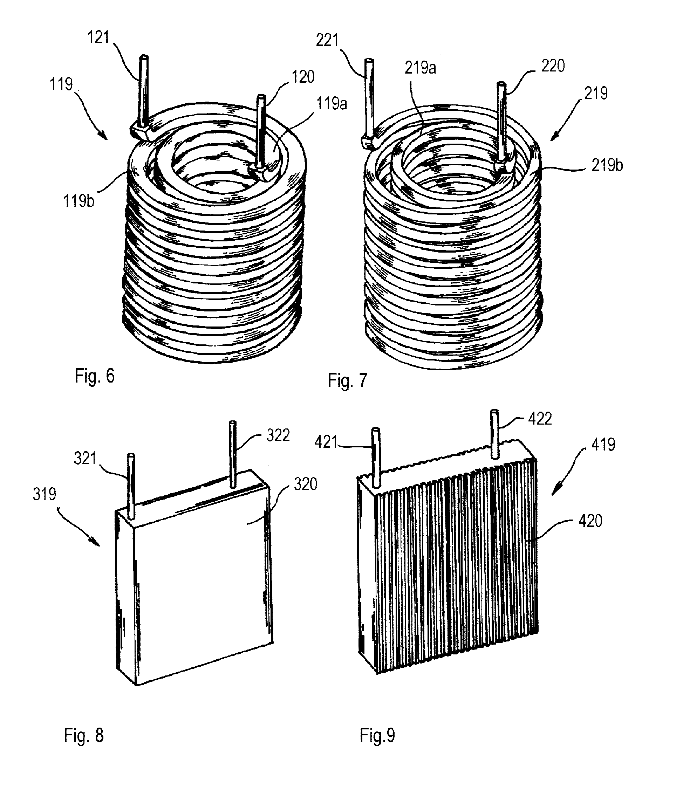

It should be noted that, in addition to the cooling element 19 disclosed above, the exchanging means 15 of the cooling unit 12 can comprise other embodiments of cooling element. These embodiments - shown in Figures 6-9 and disclosed below - have different shapes from that of the cooling element 19, but can be used in the apparatus 1 in a completely similar manner and are provided with equal efficiency in use.

Figure 6 shows a cooling element 119, made by using a stainless steel pipe (or a pipe made of another suitable material) having a rectangular cross section. The pipe forming the cooling element 119 is folded around a longitudinal axis (that is not shown) so as to form a double cylindrical coil, comprising an internal cylindrical coil 119a and an external cylindrical coil 119b. The cooling element 119 comprises an initial conduit 120 and a terminal conduit 121, corresponding respectively to a rectilinear initial portion of the internal cylindrical coil 119a and to a rectilinear terminal portion of the external cylindrical coil 119b. The initial conduit 120 and the terminal conduit 121 can both be alternatively used as an inlet conduit and an outlet conduit for the liquid refrigerating fluid, according to the manner in which the cooling element 119 is connected to the refrigerating fluid conveying means 17.

Figure 7 shows a cooling element 219, made by using a stainless steel pipe (or a pipe of another suitable material) having a square cross section. The pipe forming the cooling element 219 is folded around a longitudinal axis (that is not shown) so as to form a double cylindrical coil, comprising an internal cylindrical coil 219a and an external cylindrical coil 219b. The cooling element 119 comprises an initial conduit 220 and a terminal conduit 221, corresponding respectively to a rectilinear initial portion of the internal cylindrical coil 219a and to a rectilinear terminal portion of the external cylindrical coil 219b. The initial conduit 220 and the terminal conduit 221 can both be used alternatively as an inlet conduit and as an outlet conduit for the liquid refrigerating fluid, according to the manner in which the cooling element 219 is connected to the refrigerating fluid conveying means 17.

Figure 8 shows a cooling element 319, made in the form of smooth plate heat exchanger. The smooth plates are grouped to form a pack 320, which is substantially parallelepiped-shaped and comprises a pair of conduits 321, 322. The conduits 321 and 322 can both be alternatively used as an inlet conduit and an outlet conduit for the liquid refrigerating fluid, according to the manner in which the cooling element 319 is connected to the refrigerating fluid conveying means 17.

Figure 9 shows a cooling element 419, made in the form of corrugated plate heat exchangers. The corrugated plates are grouped to form a pack 420 that is substantially parallelepiped-shaped and comprises a pair of conduits 421, 422. The conduits 421 and 422 can both be alternatively used as an inlet conduit and an outlet conduit for the liquid refrigerating fluid, according to the manner in which the cooling element 419 is connected to the refrigerating fluid conveying means 17.

Further versions of, and/or additions to, what has been disclosed above and/or to what has been shown in the attached drawings are possible. For example, the heat exchanging means 15, instead of comprising a single cooling element 19 (119, 219, 319, 419), can comprise a plurality of mutually connected cooling elements. Each plurality can consist of equal cooling elements (for example a plurality of cooling elements 19, 119 or 219, shaped in the form of a double cylindrical coil, or of cooling elements 319 or 419, made in the form of plate heat exchangers) or it can consist of a combination of different cooling elements (for example a combination of cooling elements 19, 119 or 219 and of cooling elements 319 or 419).

## Claims

1. Apparatus (1) for cooling a cooked fluid food product (40) contained in a cooking container (50), comprising cooling means (11) suitable for cooling said cooked fluid food product (40) in said cooking container (50), said cooling means (11) comprising heat exchanging means (15) arranged for being immersed, and for being maintained temporarily immersed, in said cooked fluid food product (40) contained in said cooking container (50).

2. Apparatus (1) according to claim 1, wherein said cooling means (11) comprises moving means (16) arranged for moving said heat exchanging means (15), said moving means (16) being so configured as to enable said heat exchanging means (15) to be alternatively immersed into, or extracted from, said cooked fluid food product (40).

3. Apparatus (1) according to claim 2, wherein said moving means (16) comprises an operating portion (16a) and a supporting portion (16b) that are mutually connected, said heat exchanging means (15) being mounted on said operating portion (16a) and said supporting portion (16b) being mounted on a body (2) of said apparatus (1).

4. Apparatus (1) according to claim 3, wherein said operating portion (16a) can be moved with respect to said supporting portion (16b) according to two parallel and opposite directions (F1, F2), so as to raise or lower said heat exchanging means (15).

5. Apparatus (1) according to claim 3, wherein said operating portion (16a) is hinged on said supporting portion (16b) and can rotate towards an upper portion (4) of said body (2) or towards a base (3) of said body (2), so as to raise or lower said heat exchanging means (15).

6. Apparatus (1) according to any one of claims 3 to 5, wherein said operating portion (16a) comprises an arm (16d) and said supporting portion (16b) comprises an upright (16c) that is integral with a supporting frame (5) of said body (2).

7. Apparatus (1) according to claim 6, as appended to claim 4, wherein said arm (16d) comprises an end engaged in a guide (22) made in said upright (16c).

8. Apparatus (1) according to claim 6, as appended to claim 5, wherein said arm (16d) is hinged on said upright (16c).

9. Apparatus (1) according to any one of claims 6 to 8, wherein said heat exchanging means (14) comprises a cooling element (19) mounted on said arm (16d), said cooling element (19) being arranged for being immersed in said cooked fluid food product (40) and being suitable for being traversed by a refrigerating fluid.

10. Apparatus (1) according to claim 9, wherein said cooling element is made in the shape of a double cylindrical coil (19; 119; 219) or in the shape of a plate heat exchanger (319; 419).

11. Apparatus (1) according to claim 9, or 10, wherein said cooling means (11) comprises a cooling unit (12), said cooling unit being arranged for modifying suitably the temperature of said refrigerating fluid and for circulating said refrigerating fluid in said cooling element (19).

12. Apparatus (1) according to claim 11, wherein said cooling unit (12) comprises at least one element selected from a group consisting of: compressor (13), condenser (14), expanding means for expanding the refrigerating fluid, refrigerating fluid tank (30), plate heat exchanger (31), control unit (18).

13. Apparatus (1) according to claim 11, or 12, wherein said cooling unit (12) is connected to an external supply network, arranged for dispensing a further refrigerating fluid and cooperating with said cooling means (11) in cooling said cooked fluid food product (40) in said cooking container (50).

14. Apparatus (1) according to any preceding claim, comprising a plurality of wheels (10) through which it can be moved onto an underlying resting surface.

15. Method for cooling a cooked fluid food product (40) contained in a cooking container (50) by using the apparatus (1) according to any one of claims 1 to 14, comprising the following steps:
- immersing heat exchanging means (15) in said cooked fluid food product (40) contained in said cooking container (50), said heat exchanging means (15) being comprised in said apparatus (1);
- maintaining said heat exchanging means (15) temporarily immersed in said cooked fluid food product (40), so as to enable said heat exchanging means (15) to exchange heat with, and consequently cool, said cooked fluid food product (40);
- optionally, repeatedly extracting said heat exchanging means (15) from said cooked fluid food product (40) and repeatedly immersing said heat exchanging means (15) in said cooked fluid food product (40), so as to stir, and accelerate the cooling of, said cooked fluid food product (40).
